(19) Europäisches Patentamt / European Patent Office / Office européen des brevets

(11) **EP 2 065 184 B1**

(12) **EUROPEAN PATENT SPECIFICATION**

(45) Date of publication and mention
of the grant of the patent:
**26.08.2015 Bulletin 2015/35**

(51) Int Cl.:
***B32B 27/08*** (2006.01)   ***B32B 27/36*** (2006.01)
***B01L 3/14*** (2006.01)   ***B32B 1/08*** (2006.01)

(21) Application number: **07022924.0**

(22) Date of filing: **27.11.2007**

(54) **Transparent multilayer injection-moulded container having a fluoropolymer barrier layer**

Durchsichtiger mehrschichtiger Spritzgussbehälter mit Fluorpolymersperrschicht

Récipient multicouche transparent moulé par injection doté d'une couche barrière en fluoropolymère

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**03.06.2009 Bulletin 2009/23**

(73) Proprietor: **LA SEDA DE BARCELONA S.A.
08820 El Prat De Llobregat, Barcelona (ES)**

(72) Inventor: **Degroote, Laurent
59190 Caestre (FR)**

(74) Representative: **Matkowska, Franck et al
Matkowska & Associés
9, rue Jacques Prévert
59650 Villeneuve d'Ascq (FR)**

(56) References cited:
WO-A-2006/134764   US-A- 5 916 929
US-A1- 2005 137 371   US-A1- 2005 186 372
US-A1- 2005 186 379   US-B1- 6 555 190

**Description**

**Technical Field**

The present invention relates to a novel injection-moulded multilayer plastic container having improved air barrier and water barrier properties. The containers of the invention can be used advantageously in the medical field for collecting biological samples, and in particular can be used as blood collection tubes. The containers of the invention can also be used in the medical field, for example, as centrifuges tubes, or syringe barrels. The invention is however not limited to the medical field, but the container of the invention can be used in any field wherein a material or sample has to be stored and protected from air and water.

**Prior art**

In the medical field, for safety reasons, there is a need on the market to replace glass containers for the medical diagnosis, and more especially blood collection tubes, by plastic containers which are advantageously unbreakable.
Due to its high transparency, shatter resistance, and good air barrier properties, polyethylene terephthalate (PET) is a good candidate for making blood collection tubes. PET blood collection tubes under vacuum are thus successfully marketed for many years. Typically these PET tubes retain enough vacuum to guaranty 18 months shelf life.
There is however an increasing demand on the market to have blood collection tubes under vacuum and prefilled with additives - powder, gel or liquid (e.g. anticoagulant). This type of blood collection tubes must then exhibit both air ($N_2$ and $O_2$) and water barrier properties to guaranty the requested shelf life of 18 months.
Unfortunately, PET is a hydrophilic polymer which does not have good enough moisture barrier properties, and thus can not be used for making monolayer blood collection tubes under vacuum and prefilled with additives.
There is thus a need to develop a transparent plastic tube having similar air barrier properties compared to a PET monolayer tube, but having higher water barrier properties.
In order to improve the barrier properties of a plastic blood collection tubes, it has been proposed in the past to use a barrier label, and more especially a multilayer label wrapped around and secure to the external surface of the tube. Such technical solution is disclosed, for example, in European patent applications EP-A-0 512 612, EP-A-0 571 116, EP-A-0 580 095 and EP-A-0 603 712.
The use of a barrier label is however not satisfactory for several reasons. It requires an additional step for manufacturing the multilayer label, and an additional manufacturing step for wrapping around and securing the label onto the tube. The barrier properties are limited to the label surface. In case the label is accidentally detached from the tube, the barrier properties are no longer guaranteed.
Multilayer structures, including injection-moulded plastic containers, comprising a fluoropolymer barrier layer attached to a layer of thermoplastic polymer, via an intermediate adhesive layer, are disclosed for example in US2005/186379, US655190, or US2005/0181372.

**Objective of the invention**

The main objective of the invention is to propose a novel transparent and rigid plastic container having high water and air barrier properties.
A more particular objective of the invention is to propose a novel transparent and rigid plastic container having a small wall thickness and/or a high ratio L/WT (L: Length of the container ; WT: Wall thickness of the container) and having however high water and air barrier properties.

**Summary of the invention**

According to a first aspect, the invention relates to an injection-moulded multilayer transparent plastic container having air and water barrier properties, and defined in claim 1.
The term "fluoropolymer" used therein, including the claims, means, any polymer containing atoms of fluorine.
It is known in the prior art that fluorine-containing polymers (i.e. fluoropolymers), and more especially homo or copolymer of Polychlorotrifluoroethylene (PCTFE) are transparent polymers which can exhibit extremely low WVTR (Water Vapour Transmission Rate). But generally, commercially available fluoropolymer grades, and especially PCTFE grades, have very high viscosity (typically with a Zero Strength Time test measured according to ASTM method D 1430-81 higher than 80 ZST). Because of this very high viscosity, commercially available fluoropolymers, and more especially commercially available homo or copolymer of PCTFE, are very difficult, and even impossible, to process in an injection-moulding process.
Such a difficulty of processing is furthermore dramatically increased in case the injection-moulded article is a container having a small wall thickness and/or a high ratio L/WT, wherein L is the length of the container, and WT is the wall thickness of the container, such as for example blood collection tube.

It is thus one merit of the invention to have overcome this prejudice and to have selected a fluoropolymer, and more especially homo-or copolymer of PCTFE, having a sufficient low viscosity, in order to be processable in a co-injection moulding process and form a barrier layer of an injection-moulded multilayer transparent plastic container.

For practising the invention, homo or copolymers of PCTFE are the best candidates for making the barrier layer. The invention is however not limited to the use of homo or copolymers of PCTFE, but the barrier layer can comprise any other fluoropolymer, on condition that the selected fluoropolymer exhibits sufficiently high water barrier properties for the targeted application and a sufficiently low viscosity for being processable in a co-injection moulding process.

More particularly, in one preferred variant of the invention, the container comprises at least three adjacent layers: the barrier layer (CL) being sandwiched between two polymeric layers.

The said polymeric layers can be made from any thermoplastic polymers that can be co-injected and moulded with a fluoropolymer in order to form a multilayer container. Preferably, the thermoplastic polymer is polyester. More preferably, the best polyester candidate is homo or copolymer of PET (homo or copolymer).

The term "PET' used therein, including the claims, means, in addition to the specific polyester "polyethylene terephthalate", any similar polyesters derived from the reaction of terephthalic acid with a glycol or glycol ether, or from the reaction of a non-polymeric terephthalic acid diester, for example, dimethylterephthalate and similar diesters, with a glycol or glycol ether. Examples of such glycols and glycol ethers include cyclohexane dimethanol and diethers thereof, ethylene glycol and diethers thereof, diethylene glycol and diethers thereof, propylene glycol and diethers thereof, 1,3-propanediol and diethers thereof, butadeniols and diethers thereof, pentanediols and diethers thereof.

In one variant of the invention, in order to improve notably the clarity of the container and the layer distribution in the wall of the container, the fluoropolymer used for making the water barrier layer is selected in order to have an apparent shear viscosity that is lower than the apparent shear viscosity of the polymeric material used for making the adjacent polymeric layers.

Preferably, but not necessarily, the fluoropolymer of the barrier layer has been irradiated, before being co-injected, in order to lower its viscosity.

The invention is particularly useful, but not limited to, for making containers:

- having a high ratio (L/WT) at least equal to 50, and preferably greater than 60, wherein L is the length of the container and WT is the wall thickness of the container
  and/or
- having a low wall thickness less than 2 mm, and more preferably less than 1.5mm.

Preferably, the apparent shear viscosity of the fluoropolymer in the barrier layer (CL) is lower than the apparent shear viscosity of the polymeric material in the adjacent polymeric layers ($L_{in}$, $L_{out}$) at least for some values of apparent shear rate lower than 5000 $s^{-1}$.

More particularly, the apparent shear viscosity of the fluoropolymer in the barrier layer (CL) is preferably lower than the apparent shear viscosity of the polymeric material in the adjacent polymeric layers ($L_{in}$, $L_{out}$) for all the values of apparent shear rate between 1000 $s^{-1}$ and 5000 $s^{-1}$.

More particularly, the apparent shear viscosity of the fluoropolymer in the barrier layer (CL) is preferably lower than the apparent shear viscosity of the polymeric material in the adjacent polymeric layers ($L_{in}$, $L_{out}$) for all the values of apparent shear rate between 100 $s^{-1}$ and 1000 $s^{-1}$.

The invention also relates to a container obtained by biaxially stretching in a mould the aforesaid injection-moulded multilayer transparent plastic container.

A further object of the invention is an assembly comprising the aforesaid multilayer container, that is hermetically closed and wherein vacuum is created inside the closed container.

Optionally, the said closed container can contain one or several additives.

When the assembly is provided for blood collection, at least one additive contained in the closed container is, for example, an anticoagulant additive.

A further object of the invention is the use of the aforesaid assembly for collecting and storing a biological sample, and in particular for collecting and storing blood.

## Brief description of the drawings

The technical characteristics and advantages of the invention will appear more clearly on reading the following detailed description which is made by way of non-exhaustive and non-limiting examples, and with reference to the appended drawings, as follows:

- Figure 1 is an isometric view of a tube of the invention and of a cap for closing the tube,
- Figure 2 is a view in longitudinal cross section of the tube of figure 1,
- Figure 3 is a graph showing the $O_2$ barrier properties of three layer (PET/PCTFE/PET) tubes compared with monolayer PET tubes,
- Figure 4 is a graph showing the water barrier properties of three layer (PET/PCTFE/PET) tubes compared with monolayer PET tubes,
- Figure 5 is a graph showing the apparent shear viscosity versus apparent shear rate for a homopolymer of PET (A), a non-irradiated PCTFE polymer (Sample N°1) and several PCTFE polymers which have been irradiated at different levels ( Samples N°2 to N°6).

## Detailed description

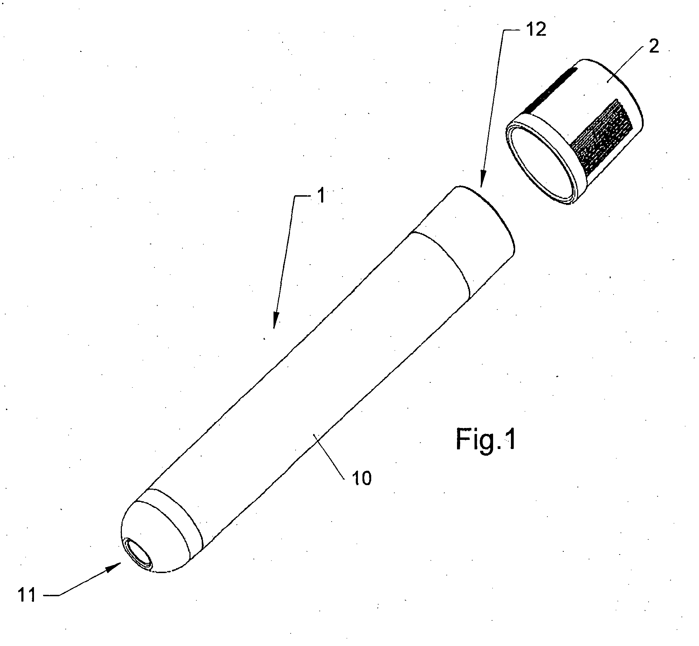

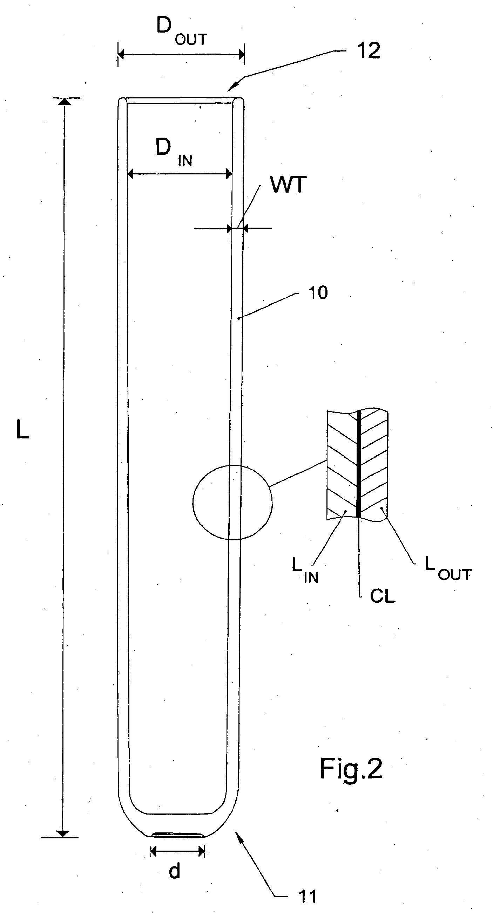

Referring to figures 1 and 2, a transparent collection tube 1 comprises a tubular wall 10 closed at one end (bottom end 11) and opened at the other end 12. When this collection tube 1 is used, for example in the medical field, it is hermetically closed at its opened end 12 by a removable cap or plug 2. This removable cap 2 is for example made of an elastomer and can be pierced by a needle.

When this collection tube 1 is used in the medical field, for example for collecting blood samples, one or several additives (for example anticoagulant in the form of a gel) are optionally introduced inside the tube 1. Then the collection tube 1 is hermetically closed, and vacuum is created inside the collection tube 1. This vacuum has to be kept inside the tube 1 for a minimum period of time (shelf life) to guaranty a certain draw volume of blood. For blood collection tubes the required minimum shelf life is typically 18 months. For this reason the wall of the collection tube 1 has to exhibit high air barrier properties.

Furthermore, when the tube 1 has been pre-filled with at least one additive (powder, gel or liquid), it is essential that the wall of the collection tube exhibits high water barrier properties. These high water barrier properties avoid, during at least the tube shelf life, that moisture coming from the outside of the tube penetrates through the wall of the tube and degrades the additives. These high water barrier properties also avoid water loss, i.e. avoid that water coming from the inside of the tube penetrates through the wall of the tube ; it prevents thereby the concentration of active ingredient in the liquid additive from increasing over time..

According to the invention, in order to obtain a collection tube 1 having both high air and water barrier properties, the collection tube 1 is an injection-moulded multilayer transparent plastic whose water barrier properties are obtained by means of at least one core layer comprising a fluoropolymer.

More particularly, in reference to figure 2, the collection tube 1 of the invention comprise preferably at least three layers: one inside polymeric layer ($L_{in}$) , one outside polymeric layer ($L_{out}$), and one core layer (CL), sandwiched between the inside and outside polymeric layers ($L_{in}$ , Lout). Said core layer (CL) comprises a fluoropolymer and exhibits high water barrier properties.

At least one of said inside ($L_{in}$) or outside (Lout) polymeric layers, and preferably both inside and outside polymeric layers, exhibits high air barrier properties.

More particularly, but not necessarily, the inside and outside layers ($L_{in,}$ $L_{out}$) are made from the same thermoplastic material.

Although the three-layer structure of figure 2 is preferred, the invention is not limited however to a three-layer structure for the wall of the injection-moulded tube 1, but the invention can be carried out with more than three layers, provided that at least one of the polymeric layer exhibits air barrier properties, and at least one of the layer comprises or is made of a fluoropolymer and exhibits water barrier properties.

Experimental results

Experiment N°1 - $O_2$ and moisture barrier properties

5 ml blood collection tubes were manufactured with a standard co-injection moulding machine Netstal Synergy 1500 equipped with a 2 cavities co-injection hot runner. The injection gate diameter d (figure 2) was 4mm.

The total length L of each tube was 75mm ; the outside diameter $D_{out}$ of each tube was 12.5mm ; the inside diameter $D_{in}$ of each tube was 10.4mm ; the wall thickness WT of each tube was 1.16mm. The ratio length over thickness (L / WT) of each tube was thus approximately equal to 65. Standard test tubes: monolayer PET tubes were made by injection moulding a homopolymer of PET (A) commercialized by Eastman Chemical under reference 9921W, and having an Intrinsic viscosity of 0.82 dl/g +/- 0.02. Tubes of the invention: three-layer tubes were made by co-injecting and moulding the aforesaid homopolymer of PET (A) and a fluoropolymer (B) referred "ACLON-1090". ACLON-1090 is a special PCTFE commercialized by Honeywell Specialty Materials and having a low viscosity (low molecular weight).

The molecular weight of the PCTFE polymer (B) can be checked by carrying out the standard test method ASTM-D 1430-81 from which a "Zero Strength Time", or "ZST" is valuated. ASTM-D 1430-81 utilizes a compression moulded test sample formed of the PCTFE polymer having dimensions of about 1.6 mm by 4.8 mm by 5.0 mm and which has a dual "v" shaped notch in the central portion of the test sample. The sample is suspended from one end with a 7.5 gram weight and suspended from the other end in an oven at 250°C. The ZST value is the time in seconds after which the sample breaks.

The ZST value of ACLON-1090, determined by testing method ASTM-D 1430-81, was around 80 ZST.

The amount of PET (A) was 85wt% and the amount of PCTFE (B) was 15wt%. The co-injection moulding process was performed in order to obtain the following layer distribution: internal and outside layers ($L_{in}$, $L_{out}$) made of PET (A) and core layer (CL) comprising the PCTFE polymer (B).

The $O_2$ barrier properties and the moisture barrier properties of the tubes were measured according to the following test methods.

<u>$O_2$ barrier properties:</u>

The objective of the test is to determine the $O_2$ gas transmission rate of the tube, i.e. the quantity of oxygen gas passing through the surface of the tube per unit of time.

The testing apparatus is: Calibrated Oxygen Transmission Analysis System MOCON 2/20.

The carrier gas is: mixture of 97.5% $N_2$ and 2.5% $H_2$ (minimum of 100ppm $O_2$)

The test method is derived from ASTM D 3895 (oxygen gas transmission rate through plastic film and sheeting using a coulometric sensor) and ASTM F 1307 (Oxygen transmission rate through dry packages using a coulometric sensor).

The finish of the empty tube under test is sealed on a metal plate of the testing apparatus by using epoxy glue in order to have a leak tight seal between the tube finish and the plate (Waiting time in order to let the epoxy glue dry around 2hours).

The tube under test is conditioned to remove all oxygen inside the tube and to acclimate to the test conditions. This is done by purging the tube with a stream of the carrier gas (gas flow of 10ml/min) which transports most oxygen out of the tube through piping in the metal plate. The outside of the tube is exposed to a known concentration of air (=20.9% $O_2$) and $O_2$ will migrate through the wall of tube into the inside of the tube.

After the conditioning period the stream of carrier gas with the migrated oxygen (same flow as conditioning) is transported to a coulometric detector that produces an electric current whose magnitude is proportional to the amount of oxygen flowing into the detector per unit of time (oxygen transmission rate in cm3/tube/day). The transmission rates are measured for a certain period and the computer will determine when the tube under test has reached equilibrium by comparing test results on a timed basis. This is called convergence testing and the convergence hours are put at 10. This means that the computer compares the test results of 10 hours before and examines the differences. Equilibrium is reached when the transmission rate varies between individual examinations by less than 1%.

The oxygen quantity (Z) passing through the wall tube in ppm of $O_2$/year is obtained by the following conversion formula:

$$Z \text{ (ppm O}_2\text{/year)} = [(32*X)/(22.4*Y)]*1000*365,$$

Wherein:
X is the oxygen transmission rate in cm$^3$/tube/day (measured by the MOCON testing apparatus), and
Y is the brimful volume of the tested tube in ml.

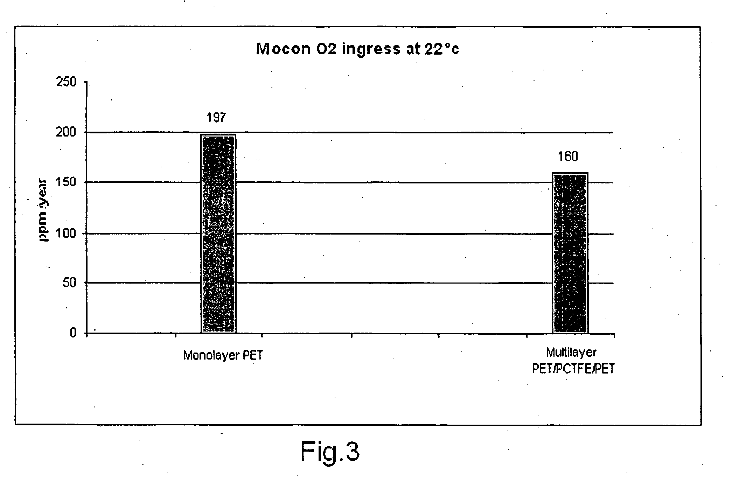

The results for the $O_2$ barrier properties measurements are shown on the graphs of figure 3. The tubes of the invention exhibit better $O_2$ barrier properties than the test tubes.

<u>Moisture barrier properties</u>

The moisture barrier properties of the tubes have been checked by measuring the water vapour transmission rate (WVTR) at 23°C and 50% RH (Relative Humidity) of the tubes based on the standard method ASTM E 96. Tubes were filled with 3 ml of demineralised water and capped with commercial rubber stopper. The initial weight of each tube was measured; then they were stored at 23 °c and 50 % RH. The weight of each tube was measured every 2 weeks during 100 days.

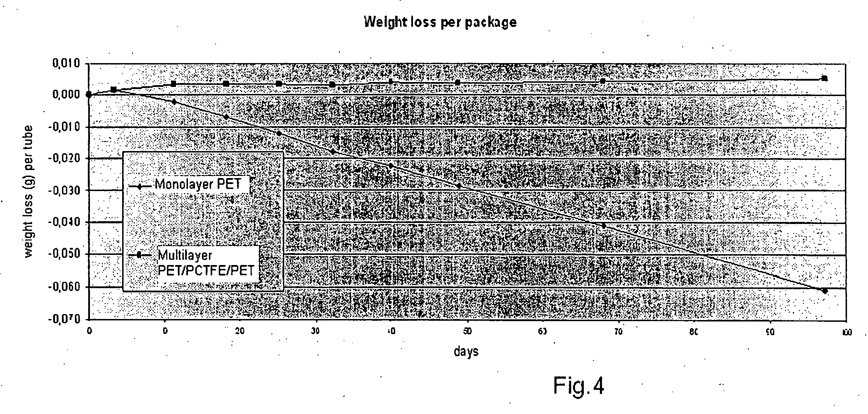

The results of the moisture barrier properties measurement are shown on the graphs of figure 4. These results show that with the tubes of the invention, the water barrier properties are dramatically improved.

Experiment N°2- Melt rheology

Different samples (N°1 to N°6) of three layer tubes 1 having the same dimensions as the tubes of experiment N°1 were manufactured with a standard co-injection moulding machine Netstal Synergy 1500 equipped with a 2 cavities co-injection hot runner. The injection gate diameter (d) was 4mm.

All the samples were made by co-injecting and moulding the same aforesaid PET (A) and a PCTFE (C).

The amount of PET (A) was 85wt% and the amount PCTFE (C) was 15wt%. The co-injection moulding process was performed in order to obtain the following layer distribution: internal and outside layers ($L_{in}$, $L_{out}$) made of PET (A) and core layer (CL) comprising the PCTFE polymer (C). Sample N°1 (same as the three-layer tube of Experiment N°1 ) : The PCTFE polymer (C) is the same than the aforesaid PCTFE polymer (B) (i.e. ACLON-1090).

For Samples N°2 to N°6, PCTFE polymer (C) was PCTFE polymer (B) referred ACLON-1090, but irradiated by e-beam radiations (electron beam radiations) at different radiation levels, in order to lower the viscosity of the PCTFE polymer as follows:

Sample N°2: ACLON-1090 irradiated at 2Megarads
Sample N°3: ACLON-1090 irradiated at 6Megarads
Sample N°4: ACLON-1090 irradiated at 12Megarads
Sample N°5: ACLON-1090 irradiated at 16Megarads
Sample N°6: ACLON-1090 irradiated at 20Megarads

One skilled in the art should recognize that any known irradiation method (gamma radiation, Beta radiation, UV radiation,...) for lowering the viscosity of a fluoropolymer, and in particular of PCTFE polymers can be used within the scope of the invention. For a full understanding of the effect of high energy radiations on fluoropolymer, one skilled in the art can refer, for example, to the following publication : "Les polymères fluorés et l'industrie nucléaire P.T.F.E. et P.T.F.C.E.", A. Monnet & R.Bensa , Energie Nucléaire Vol 13 , N°2 , March - April 1971, pages 127-132

The apparent shear viscosity of the PET (A) and the apparent shear viscosity of the PCTFE polymers (C) [ for each sample N°1 to N°6] were determined by carrying out the standard test method ASTM D 3835-02 (" Standard Test Method for Determination of Properties of Polymeric Materials by Means of Capillary Rheometer").

The equipment used for carrying out the standard test method ASTM D 3835-02 was a capillary rheometer Dynisco LCR 6000 with the following procedure and parameters:

- Die size : Diameter=0.762mm, Length=22.86mm, Cone Angle = 120°
- test temperature was set to : 280°C
- the barrel was filled with 15 to 20 ml sample (pellets)
- a rod was used for compacting the material
- the blend was processed at 10 to 10,000 reciprocal seconds (strain rate)

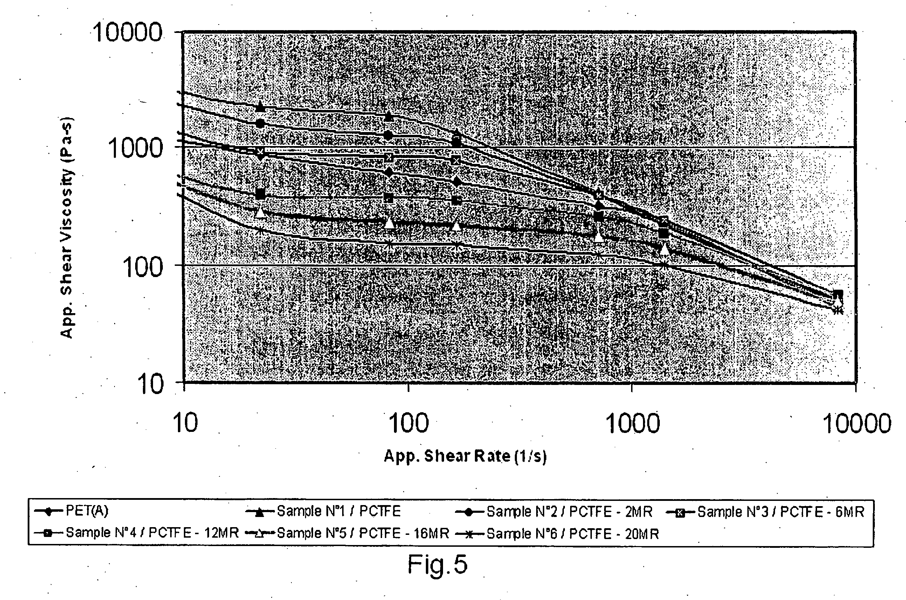

For each polymer, seven data points were collected. For each polymer, the apparent shear viscosity (PA-s) versus apparent shear rate (1/s) is reported on figure 5.

Samples N°1 to N°3 exhibited some visual haziness, yellowness and black streaks in the wall 1 of the tubes. The viscosity of the PCTFE polymer (C) used for manufacturing these samples was too high compared with the viscosity of the PET (A).

Samples N° 4 and N°5 for which the apparent shear viscosity was lower than the apparent shear viscosity of PET (A) (see figure 5) gave very good results in terms of clarity - similar to monolayer PET- and layer distribution. The optimal result was obtained with samples N°4.

Samples N°6 gave good results in terms of clarity but were characterized by the formation of an uneven front line of the PCTFE layer. This front line appears because the viscosity of the irradiated PCTFE (C) is too low, compared with the viscosity of PET (A) (see figure 5).

The invention is not limited to the particular PET/PCTFE/PET tube 1 that has been described in reference to the appended drawings, but extends to any container defined in the appended claims. Moreover, the container of the invention defined in the appended claims can be also an injection-moulded preform (intermediary container) that is intended to be biaxillay-stretched in a mould in order to form a final container of higher volume, for example by means of the well-known technique of stretch-blow moulding.

The container of the invention are not necessarily used as blood collection tube, but can also be used as centrifuges tubes or syringe barrels. The containers of the invention are advantageously useful in the medical field. The invention is not limited however to the medical field, but the containers of the invention can be used in any field wherein air barrier and water barrier properties are required for the container.

**Claims**

1. An injection-moulded multilayer transparent plastic container (1) having air and water barrier properties, and comprising at least three adjacent layers: a barrier layer (CL) being sandwiched between two polymeric layers (Lin, Lout), the barrier layer (CL) comprising a fluoropolymer, and wherein the apparent shear viscosity of the fluoropolymer in the barrier layer (CL) is lower than the apparent shear viscosity of the polymeric material in the adjacent polymeric layers ($L_{in}$, $L_{out}$) at least for some values of apparent shear rate lower than 5000 s-1.

2. The container of claim 1 wherein said fluoropolymer is a homo or copolymer of polychlorotrifluoroethylene (PCTFE).

3. The container of claim 1 or 2, wherein the polymeric layers (Lin, Lout) comprises a polyester.

4. The container of claim 3, wherein said polyester is a homo or copolymer of PET.

5. The container of any one of claims 1 to 4, wherein the apparent shear viscosity of the fluoropolymer in the barrier layer (CL) is lower than the apparent shear viscosity of the polymeric material in the adjacent polymeric layers ($L_{in}$, $L_{out}$) for all the values of apparent shear rate between 1000s-1 and 5000 s-1.

6. The container of any one of claims 1 to 5, wherein the apparent shear viscosity of the fluoropolymer in the barrier layer (CL) is lower than the apparent shear viscosity of the polymeric material in the adjacent polymeric layers ($L_{in}$, $L_{out}$) for all the values of apparent shear rate between 100s-1 and 1000 s-1.

7. The container of any one of claims 1 to 6, wherein the fluoropolymer in the barrier layer (CL) has been irradiated in order to lower its viscosity.

8. The container of any one of claims 1 to 7, having a ratio (L/WT) at least equal to 50, and preferably greater than 60, wherein L is the length of the container and WT is the wall thickness of the container.

9. The container of any one of claims 1 to 8, wherein the wall thickness of the container (WT) is less than 2 mm, and preferably less than 1.5mm.

10. Container obtained by biaxially stretching a container according to any one of claims 1 to 9.

11. Assembly comprising a container of any one of claims 1 to 10, hermetically closed and wherein vacuum is created inside the closed container.

12. Assembly of claim 11 wherein the closed container contains additive(s).

13. Assembly of claim 12, wherein the closed container contains at least one anticoagulant additive.

14. Use of the assembly of any one of claims 11 to 13, for collecting and storing a biological sample.

15. The use of claim 14, for collecting and storing blood.


**Patentansprüche**

1. **Spritzgegossener mehrschichtiger transparenter Kunststoffbehälter (1)** mit Luft- und Wasserbarriereeigenschaften, und mit zumindest drei benachbarten Schichten: eine Barriereschicht (CL) zwischen zwei Polymerschichten (Lin, Lout), wobei die Barriereschicht (CL) ein Fluorpolymer umfasst, und wobei die scheinbare Scherviskosität des Fluorpolymers in der Barriereschicht (CL) geringer ist als die scheinbare Scherviskosität des Polymermaterials in den benachbarten Polymerschichten ($L_{in}$, $L_{out}$), zumindest für einige Werte der scheinbaren Scherviskosität geringer als 5000 s-1.

2. Behälter nach Anspruch 1, wobei das Fluorpolymer ein Homo- oder Copolymer von Polychlortrifluorethylen (PCTFE) ist.

3. Behälter nach einem der Ansprüche 1 oder 2, wobei die Polymerschichten (Lin, Lout) einen Polyester umfassen.

**4.** Der Behälter nach Anspruch 3, wobei der Polyester ein Homo- oder Copolymer von PET ist.

**5.** Behälter nach einem der Ansprüche 1 bis 4, wobei die scheinbare Scherviskosität des Fluorpolymers in der Barriereschicht (CL) geringer ist als die scheinbare Scherviskosität des Polymermaterials in den benachbarten Polymerschichten ($L_{in}$, $L_{out}$), für alle Werte der scheinbaren Scherviskosität zwischen 1000 s$^{-1}$ und 5000 s$^{-1}$.

**6.** Behälter nach einem der Ansprüche 1 bis 5, wobei die scheinbare Scherviskosität des Fluorpolymers in der Barriereschicht (CL) geringer ist als die scheinbare Scherviskosität des Polymermaterials in den benachbarten Polymerschichten ($L_{in}$, $L_{out}$), für alle Werte der scheinbaren Scherviskosität zwischen 100 s$^{-1}$ und 1000 s$^{-1}$.

**7.** Behälter nach einem der Ansprüche 1 bis 6, wobei das Fluorpolymer in der Barriereschicht (CL) bestrahlt wurde, um dessen Viskosität zu verringern.

**8.** Behälter nach einem der Ansprüche 1 bis 7, mit einem Verhältnis (L/WT) von zumindest gleich 50, und bevorzugt größer als 60, wobei L die Länge des Behälters ist und WT die Wanddicke des Behälters ist.

**9.** Behälter nach einem der Ansprüche 1 bis 8, wobei die Wanddicke des Behälters (WT) kleiner als 2 mm ist, und bevorzugt kleiner als 1,5 mm ist.

**10.** Behälter, erhalten durch biaxiales Strecken eines Behälters nach einem der Ansprüche 1 bis 9.

**11.** Anordnung mit einem Behälter nach einem der Ansprüche 1 bis 10, die hermetisch verschlossen ist und wobei ein Vakuum in dem geschlossenen Behälter erzeugt wird.

**12.** Anordnung nach Anspruch 11, wobei der verschlossene Behälter ein Additiv oder Additive enthält.

**13.** Anordnung nach Anspruch 12, wobei der verschlossene Behälter zumindest einen Antikoagulationszusatz enthält.

**14.** Verwendung der Anordnung nach einem der Ansprüche 11 bis 13 zum Nehmen und Lagern einer biologischen Probe.

**15.** Verwendung von Anspruch 14 zum Nehmen und Lagern von Blut.

**Revendications**

**1.** Récipient (1) plastique multicouche transparent moulé par injection doté de propriétés d'étanchéité à l'air et à l'eau et comprenant au moins trois couches adjacentes : une couche barrière (CL) prise en sandwich entre deux couches polymères ($L_{in}$, $L_{out}$), la couche barrière (CL) comprenant un fluoropolymère, et dans lequel le coefficient de viscosité apparente de cisaillement du fluoropolymère présent dans la couche barrière (CL) est inférieur au coefficient de viscosité apparente de cisaillement du matériau polymère présent dans les couches polymères adjacentes ($L_{in}$, $L_{out}$) au moins pour certaines valeurs de la vitesse de cisaillement apparente inférieures à 5 000 s$^{-1}$.

**2.** Récipient selon la revendication 1, dans lequel ledit fluoropolymère est un homo- ou un copolymère de polychlorotrifluoroéthylène (PCTFE).

**3.** Récipient selon la revendication 1 ou 2, dans lequel les couches polymères ($L_{in}$, $L_{out}$) comprennent un polyester.

**4.** Récipient selon la revendication 3, dans lequel ledit polyester est un homo- ou un copolymère de PET.

**5.** Récipient selon l'une quelconque des revendications 1 à 4, dans lequel le coefficient de viscosité apparente de cisaillement du fluoropolymère présent dans la couche barrière (CL) est inférieur au coefficient de viscosité apparente de cisaillement du matériau polymère présent dans les couches polymères adjacentes ($L_{in}$, $L_{out}$) pour toutes les valeurs de la vitesse de cisaillement apparente comprises entre 1 000 et 5 000 s$^{-1}$.

**6.** Récipient selon l'une quelconque des revendications 1 à 5, dans lequel le coefficient de viscosité apparente de cisaillement du fluoropolymère présent dans la couche barrière (CL) est inférieur au coefficient de viscosité apparente de cisaillement du matériau polymère présent dans les couches polymères adjacentes ($L_{in}$, $L_{out}$) pour toutes les valeurs de la vitesse de cisaillement apparente comprises entre 100 et 1 000 s$^{-1}$.

**7.** Récipient selon l'une quelconque des revendications 1 à 6, dans lequel le fluoropolymère présent dans la couche barrière (CL) a été exposé à un rayonnement pour abaisser sa viscosité.

**8.** Récipient selon l'une quelconque des revendications 1 à 7, présentant un rapport (L/WT) au moins égal à 50 et, de préférence, supérieur à 60, L correspondant à la longueur du récipient et WT à l'épaisseur de la paroi du récipient.

**9.** Récipient selon l'une quelconque des revendications 1 à 8, dans lequel l'épaisseur de la paroi du récipient (WT) est inférieure à 2 mm et, de préférence, à 1,5 mm.

**10.** Récipient obtenu par étirage biaxial d'un récipient selon l'une quelconque des revendications 1 à 9.

**11.** Ensemble comprenant un récipient selon l'une quelconque des revendications 1 à 10, hermétiquement fermé et **caractérisé en ce que** le vide est fait à l'intérieur du récipient fermé.

**12.** Ensemble selon la revendication 11, dans lequel le récipient fermé contient un ou des additifs.

**13.** Ensemble selon la revendication 12, dans lequel le récipient fermé contient au moins un additif anticoagulant.

**14.** Utilisation de l'ensemble selon l'une quelconque des revendications 11 à 13, en vue du recueil et de la conservation d'un échantillon biologique.

**15.** Utilisation selon la revendication 14, en vue du recueil et de la conservation du sang.

Fig.1

Fig.2

Fig.3

Fig.4

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0512612 A
- EP 0571116 A
- EP 0580095 A
- EP 0603712 A

- US 2005186379 A
- US 655190 A
- US 20050181372 A

**Non-patent literature cited in the description**

- **A. MONNET ; R.BENSA.** Les polymères fluorés et l'industrie nucléaire P.T.F.E. et P.T.F.C.E. *Energie Nucléaire,* March 1971, vol. 13 (2), 127-132